# EUROPÄISCHE PATENTANMELDUNG

(11) **EP 3 919 539 A1**
(43) Veröffentlichungstag der Anmeldung: **08.12.2021**
(21) Anmeldenummer: 20178243.0
(22) Anmeldetag: 04.06.2020
(51) Int. Cl.: C08G 18/42, C08G 18/48, C08G 18/69, C08G 18/76

(54) **HERSTELLUNG VON POLYURETHANSCHAUM**

(71) Anmelder: Evonik Operations GmbH, 45128 Essen (DE)
(72) Erfinder: WAGNER, Michael, 45659 Recklinghausen (DE); ALTENBUCHNER, Peter, 48155 Münster (DE)
(74) Vertreter: Evonik Patent Association

(57) **Zusammenfassung**

Zusammensetzungen zur Herstellung von Polyurethanschaum, umfassend zumindest eine Isocyanat-Komponente, eine Polyolkomponente, optional einen Katalysator, der die Ausbildung einer Urethan- oder Isocyanurat-Bindung katalysiert, optional Treibmittel, wobei die Zusammensetzung Block-Copolymere auf Basis von OH- oder Amino-funktionalisierten Polyolefinen und Polyestern, welche als Schaumstabilisator wirken, umfasst, werden beschrieben.

## Beschreibung

Die vorliegende Erfindung liegt auf dem Gebiet der Polyurethanschäume. Insbesondere betrifft sie die Herstellung von Polyurethanhartschäumen unter Einsatz von Block-Copolymeren auf Basis von OH- oder Amino-funktionalisierten Polyolefinen und Polyestern, welche als Schaumstabilisator wirken. Weiterhin betrifft sie entsprechende Zusammensetzungen sowie die Verwendung der Schäume, die erfindungsgemäß hergestellt wurden. Es handelt sich hierbei insbesondere um Polyurethanhartschäume.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daherwerden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine. Die am meisten bevorzugten Schäume im Rahmen der vorliegenden Erfindung sind Polyurethanhartschäume.

Bei der Herstellung von Polyurethan- und Polyisocyanurat-Schaumstoffen, insbesondere entsprechenden Hartschaumstoffen werden zellstabilisierende Additive eingesetzt, welche für eine feinzellige, gleichmäßige und störungsarme Schaumstruktur sorgen sollen und damit die Gebrauchseigenschaften, so zum Beispiel besonders das thermische Isolationsvermögen des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen.

Verschiedene Veröffentlichungen bezüglich der Verwendung von auf Siloxan basierenden Additiven wurden bereits publiziert. Meist kommen hierbei Polyethersiloxan-Schaumstabilisatoren (PES) zum Einsatz.

Die EP 0 570 174 B1 beschreibt Polyethersiloxane, die sich für die Herstellung von Polyurethan-Hartschäumen unter Verwendung von organischen Treibmitteln, insbesondere Fluorchlorkohlenwasserstoffen wie CFC-11 eignen.

In der EP 0 533 202 A1 werden Polyethersiloxane beschrieben, die SiC-gebundene Polyalkylenoxiden-Reste tragen und bei der Verwendung von Hydrochlorfluorkohlenwasserstoffe, wie z. B. HCFC-123, als Treibmittel, geeignet sind.

Die EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

EP1544235 beschreibt typische Polyether-modifizierte Siloxane für PU-Hartschaumanwendungen. Hier werden Siloxane mit 60 bis 130 Si-Atomen und unterschiedlichen Polyethersubstituenten R, deren Mischungsmolgewicht 450 bis 1000 g/mol beträgt und deren Ethylenoxidanteil bei 70 bis 100 mol % liegt, verwendet.

In CN103055759, werden Polyether-modifizierte Silxoane beschrieben, die eine verbesserte Zellöffnung bewirken. Es sind mindestens 18 Si-Einheiten im Siloxan enthalten und es werden verschiedenartige Seitenketten zur Modifizierung verwendet.

EP 1873209 beschreibt Polyether-modifizierte Siloxane zur Herstellung von PU-Hartschäumen mit verbesserten Brandeigenschaften. Hier sind 10 bis 45 Si-Atome in den Siloxanen enthalten und die Polyether-Seitenketten bestehen zu mind. 90% aus Ethylenoxid-Einheiten.

EP 2465891 A1 beschreibt Polyether-modifizierte Siloxane bei denen die Polyetherseitenketten teilweise OH-Gruppen tragen. Hierbei enthalten die Siloxane mindestens 10 Si Atome.

EP 2465892 A1 beschreibt Polyether-modifizierte Siloxane bei denen die Polyetherseitenketten hauptsächlich sekundäre OH-Endgruppen tragen, wobei auch hier die Siloxane mindestens 10 Si Atome enthalten.

In DE 3234462 werden Siloxane zur Verwendung in Weichschaum, speziell Weichformschaum, beschrieben. Hier werden Kombinationen aus Polyether-modifizierten Siloxanen (PES) und Polydimethylsiloxanen beschrieben, wobei die PES von 4 bis 15 Si-Einheiten enthalten.

Nichtsdestotrotz besteht weiterhin ein Bedarf an weiteren Zellstabilisatoren für PU-Schaum, vorzugsweise für PU-Hartschaum, und insbesondere an solchen Zellstabilisatoren, welche eine Siloxan-freie Zellstabilisierung grundsätzlich ermöglichen.

Die konkrete Aufgabe der vorliegenden Erfindung war es nun, die Bereitstellung von PU-Schäumen, insbesondere PU-Hartschäumen zu ermöglichen, wobei eine Siloxan-freie Zellstabilisierung grundsätzlich realisiert werden kann.

Überraschenderweise wurde nun gefunden, dass bei Verwendung von Block-Copolymeren auf Basis von OH- oder Amino-funktionalisierten Polyolefinen und Polyestern als Schaumstabilisator PU-Schäume, insbesondere PU-Hartschäume in einwandfreier Qualität hergestellt werden können. Die erfindungsgemäßen Block-Copolymere ermöglichen grundsätzlich eine Siloxan-freie Zellstabilisierung, d.h. sie ermöglichen den vollständigen Verzicht auf Siloxan basierenden Additiven, wie z.B. den bekannten Polyethersiloxan-Schaumstabilisatoren. Allerdings erlauben sie auch den gemeinsamen Einsatz mit den aus dem Stand der Technik bekannten Siloxan-haltigen-Stabilsatoren. Beides ist von der vorliegenden Erfindung mitumfasst.

Gegenstand der Erfindung ist vor diesem Hintergrund eine Zusammensetzung zur Herstellung von Polyurethanschaum, insbesondere Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, optional Treibmittel, wobei diese Zusammensetzung Block-Copolymere auf Basis von OH- oder Amino-funktionalisierten Polyolefinen und Polyestern umfasst. Die erfindungsgemäßen Block-Copolymere wirken als Schaumstabilisator bei der Herstellung von Polyurethanschaum, insbesondere PU-Hartschäumen.

Der erfindungsgemäße Gegenstand ermöglicht die Bereitstellung von PU-Schaumstoff, vorzugsweise PU-Hartschaumstoff unter Verzicht auf die bekannten Siloxan-haltigen-Stabilisatoren. Die resultierenden PU-Schaumstoffe erfüllen dennoch die bekannten Anforderungen. Sie sind vorteilhafterweise dimensionsstabil, hydrolysestabil, weisen ein hervorragendes Langzeitverhalten auf. Sie verfügen vorteilhafterweise über sehr gute Isolationseigenschaften, ein sehr hohes Dämmvermögen, hohe mechanische Festigkeit, hohe Steifigkeit, hohe Druckfestigkeit. Der erfindungsgemäße Gegenstand ermöglicht weiterhin die Bereitstellung von PU-Schaumstoff, vorzugsweise PU-Hartschaumstoff unter gemeinsamem Einsatz mit den aus dem Stand der Technik bekannten Siloxan-haltigen-Stabilsatoren.

Block-Copolymere auf Basis von OH- oder Amino-funktionalisierten Polyolefinen und Polyestern sind aus dem Stand der Technik an sich bereits bekannt. Hierzu sei insbesondere auf die europäische Patentanmeldung EP 3 243 863 A1 verwiesen, die sich inhaltlich allerdings auf Kleb- oder Dichtstoffe bezieht und PU-Schäume weder erwähnt noch thematisiert.

Wenn es sich bei den erfindungsgemäßen eingesetzten Block-Copolymeren um B(A)x-Blocksysteme, mit A = Polyester, mit B = OH- oder Amino-funktionalisiertes Polyolefin und mit x ≥ 1 handelt, vorzugsweise x = 1,5 bis 5, insbesondere x = 2 bis 3, so liegt eine bevorzugte Ausführungsform der Erfindung vor.

Wenn das OH- oder Amino-funktionalisierte Polyolefin B ein Polybutadien enthaltend die oder vorzugsweise bestehend aus den von 1,3-Butadien abgeleiteten Monomereinheiten 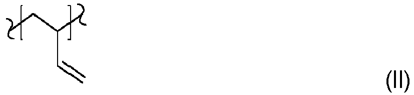 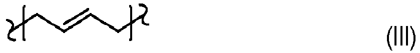 und 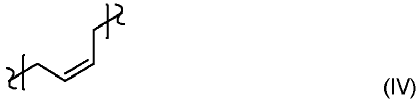 ist, mit der Maßgabe, dass die Monomereinheiten (II), (III) und (IV) blockweise oder statistisch verteilt angeordnet sein können, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit, einer Hydroxygruppe oder eine Aminogruppe verbunden ist, so liegt eine weitere bevorzugte Ausführungsform der Erfindung vor.

Wenn im Polyolefinrest B zusätzlich zu einem Anteil von bis zu 5 Molprozent bezogen auf das Polybutadien eine oder mehrere verzweigende Struktur/en der Formeln (V), (VI) oder (VII) 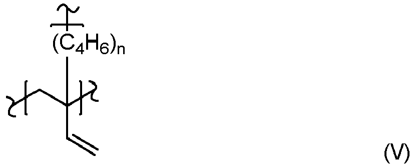 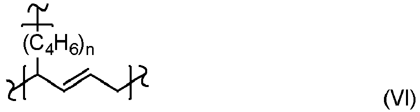 und/oder 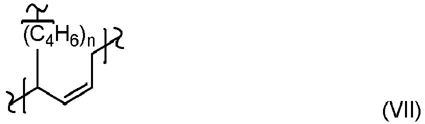 vorhanden sind, wobei "(C₄H₆)ₙ" einem Butadien-Oligomer enthaltend die oder vorzugsweise bestehend aus den Wiederholungseinheiten (II), (III) und (IV) entspricht, so liegt wiederum eine weitere bevorzugte Ausführungsform der Erfindung vor.

Gemäß einer weiteren bevorzugten Ausführungsform der Erfindung liegt das Polybutadien in unhydrierter, teilweise hydrierter oder vollständig hydrierter Form vor.

Geeignete Verfahren zur Herstellung einsetzbarer Polybutadiene sind beispielsweise in EP 2 492 292 beschrieben. Im Rahmen der vorliegenden Erfindung beispielsweise einsetzbare Polybutadiene sind auch kommerziell erhältlich, beispielsweise OH-funktionalisiertes Polybutadien als POLYVEST® HT von der Evonik Resource Efficiency GmbH.

Neben den OH- oder Amino-funktionalisierten Polyolefinen enthalten die erfindungsgemäß eingesetzten Block-Copolymere Blöcke aus Polyestern, insbesondere basieren die Block-Copolymere auf Polyestern aus Lactonen und/oder Lactid.

Wiederum liegt eine weitere bevorzugte Ausführungsform der Erfindung vor, wenn der Polyesterrest A die Struktur I aufweist: 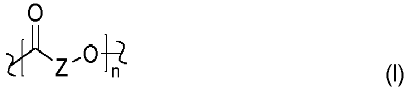 mit Z = gleiche oder verschiedene Kohlenwasserstoffreste, bevorzugt -C₅H₁₀- und/oder -C(CH₃)H- Rest und n = 1-150.

Basieren die Block-Copolymere auf Polyestern aus Lactonen und/oder Lactiden, besonders bevorzugt Caprolacton und/oder Lactid, so liegt eine weitere bevorzugte Ausführungsform der Erfindung vor.

Beispielsweise geeignete Lactone sind insbesondere C₃-Lactone wie β-Propiolacton, C₄-Lactone wie β -Butyrolacton oder γ-Butyrolacton, Cs-Lactone wie 4-Hydroxy-3-pentensäure-gamma-!acton, α -Methylene-γ-butyrolacton, γ-Methylene-γ-butyrolacton, 3-Methyl-2(5H)-furanon, γ-Valerolacton, δ -Valerolacton, C₆-Lactone wie δ-Hexalacton, ε-Caprolacton oder γ-Hexalacton, oder weitere Lactone wie 5-Butyl-4-methyldihydro-2(3H)-furanon, δ-Octanolactone, γ-Phenyl-ε-caprolacton, Oxacyclododecan-2-on, Oxacyclotridecan-2-on, Pentadecanolid, 16-Hexadecanolid, γ-Undecalacton, δ-Undecalacton, γ -Methylene-γ-butyrolacton sowie Mischungen daraus.

Unter Lactiden werden im Rahmen der vorliegenden Erfindung zyklische Ester der Milchsäure verstanden, die in drei Isomeren vorkommen können: (S,S)-3,6-Dimethyl-1,4-dioxan-2,5-dion (CAS-Nr. 4511-42-6), (R,R)-3,6-Dimethyl1,4-dioxan-2,5-dion (CAS-Nr. 25038-75-9) sowie (meso)- 3,6-Dimethyl-1,4-dioxan-2,5-dion (CAS-Nr. 13076-19-2). Keine isomere Form ist hierbei besonders bevorzugt.

Bevorzugt werden zur Herstellung der Block-Copolymere Mischungen von mindestens zwei Lactonen und/oder Lactiden verwendet, vorzugsweise Mischungen aus einem Lacton und einem Lactid, wobei Mischungen aus ε-Caprolacton und Lactid insbesondere bevorzugt sind. Hierdurch können die Eigenschaften der Block-Copolymere gezielt variiert werden, insbesondere bezüglich der Mischbarkeit mit anderen Polyester-Polyolen, Polyether-Polyolen, Polyethersiloxanene oder hinsichtlich der thermischen Eigenschaften.

Die erfindungsgemäß eingesetzten Block-Copolymere können insbesondere durch OH- oder Aminoinitiierte Ringöffnungspolymerisation erhalten werden. Dabei dienen die OH- oder Amino-funktionalisierten Polymere als Initiator bei der Ringöffnung der Lactone und/oder Lactide, die zum Aufbau der Polyesterketten an das OH- oder Amino-funktionalisierte Polymer führt.

Übliche homogene Katalysatoren für die Ringöffnungspolymerisation sind beispielsweise Zinn(II)-ethylhexanoat, Dibutylzinndilaurat, organische Amidinbasen wie 1,8-Diazabicyclo[5.4.0]undec-7-en, 1,5-Diazabicyclo[4.3.0]non-5-ene, 1,4-Diazabicyclo[2.2.2]octane sowie 1,5,7-Triazabicyclo[4.4.0]dec-5-ene oder Titan(IV)-Alkoholate wie Tetramethyltitanat, Tetrabutyltitanat, Tetraisopropyltitanat, Tetraphenyltitanat, Dibutyltriethanolamintitanat, Tetrahexyltitanat oder Triethanolaminatoisopropyltitanat. Die Ringöffnungsreaktion wird normalerweise bei Temperaturen von 20 - 250 °C durchgeführt, insbesondere in einem Zeitraum von 1 - 20 Stunden, wahlweise in der Schmelze oder in Anwesenheit von Lösungsmitteln. Die molaren Verhältnisse von Lacton und/oder Lactid zu OH- oder Amino-Gruppenhaltigen Polymeren betragen üblicherweise 1:1 bis 200:1.
Die Konzentration an Hydroxylendgruppen der erfindungsgemäß eingesetzten Block-Copolymere, titrimetrisch nach DIN 53240-2 bestimmt, liegt vorzugsweise zwischen 0 und 300 mg KOH /g, bevorzugt zwischen 5 und 50 mg KOH /g.
Das zahlenmittlere Molekulargewicht der erfindungsgemäß eingesetzten Block-Copolymere beträgt vorzugsweise 600 - 60 000 g/mol, insbesondere 1000 - 30 000 g/mol. Es wird nach DIN 55672-1 mittels Gelpermeationschromatographie in Tetrahydrofuran als Eluent und Polystyrol zur Kalibrierung bestimmt.

Beträgt der Massenanteil der Gesamtmenge an erfindungsgemäßem Block-Copolymer bezogen auf 100 Massenteile Polyolkomponente 0,1 bis 10 pphp, bevorzugt 0,5 bis 5 pphp und besonders bevorzugt 1 bis 4 pphp so liegt wiederum eine bevorzugte Ausführungsform der Erfindung vor.

Wenn sich eine erfindungsgemäße Zusammensetzung dadurch auszeichnet, dass der massengewichtete Anteil des Polyesterrestes A mindestens 20%, bevorzugt mindestens 30% besonders bevorzugt mindestens 35% beträgt, so liegt wiederum eine bevorzugte Ausführungsform der Erfindung vor.

Die vorliegende Erfindung ermöglicht den Verzicht auf Si-haltige Schaumstabilisatoren. In diesem Sinne entsprechen erfindungsgemäße Zusammensetzungen, welche Si-haltige Schaumstabilisatoren, bezogen auf die Gesamtmenge an Schaumstabilisatoren, zu weniger als 15 Gew.-%, vorzugsweise weniger als 10 Gew.-%, weiter bevorzugt weniger als 5 Gew.-%, bevorzugter weniger als 3 Gew.-%, noch bevorzugter weniger als 1 Gew.-%, insbesondere weniger als 0,5 Gew.-% oder gar nicht enthalten, einer bevorzugten Ausführungsform der Erfindung.

Wie erwähnt, ermöglicht die vorliegende Erfindung darüber hinaus den parallelen Einsatz von Si-haltigen Schaumstabilisatoren. In diesem Sinne entsprechen erfindungsgemäße Zusammensetzungen, welche Si-haltige Schaumstabilisatoren, bezogen auf die Gesamtmenge an Schaumstabilisatoren, zu mehr als 1 Gew.-%, vorzugsweise mehr als 10 Gew.-%, insbesondere mehr als 20 Gew.-% enthalten, einer bevorzugten Ausführungsform der Erfindung. Im Rahmen solcher Ausführungsform sind z.B. auch 50 Gew-%:50 Gew.-% Mischungen möglich, d.h. die Zusammensetzung würde zu gleichen Teilen das erfindungsgemäße Block-Copolymer als auch Si-haltige Schaumstabilisatoren umfassen. Es wurde nämlich überraschend gefunden, dass das erfindungsgemäße Block-Copolymer die Emulgierbarkeit von Si-haltigen Schaumstabilisatoren stark verbessert.

Neben den erfindungsgemäßen Block-Copolymere auf Basis von OH- oder Amino-funktionalisierten Polyolefinen und Polyestern können grundsätzlich alle nach dem Stand der Technik bekannten schaumstabilisierenden Komponenten zusätzlich zum Einsatz kommen.

Die erfindungsgemäßen Block-Copolymere können in Substanz oder auch in einem Lösungsmittel zur Verwendung kommen. Hierbei können alle geeigneten Substanzen zum Einsatz kommen, die bei der Herstellung von PU-Schäumen verwendbar sind. Bevorzugt können als Lösungsmittel Substanzen verwendet werden, die in üblichen Rezepturen bereits zum Einsatz kommen wie z.B. OH-funktionelle Verbindungen, Polyole, Flammschutzmittel, etc.

Eine bevorzugte erfindungsgemäße Zusammensetzung enthält die folgenden Bestandteile:
a) erfindungsgemäße Block-Copolymere, wie zuvor beschrieben,
b) mindestens eine Polyolkomponente,
c) mindestens ein Polyisocyanat und/oder Polyisocyanat-Präpolymer,
d) optional ein Katalysator, der die Reaktion von Polyolen b) mit den Isocyanaten c) beschleunigt, bzw. steuert,
e) optional weitere Schaumstabilisatoren, insbesondere entsprechende silizium-haltige Verbindungen,
f) optional ein oder mehrere Treibmittel,
g) optional weitere Additive, Füllstoffe, Flammschutzmittel, etc.
dabei ist es bevorzugt, dass die Komponenten d) und f) zwingend enthalten sind.

Es entspricht einer bevorzugten Ausführungsform der Erfindung, wenn zur Herstellung der Polyurethanschäume neben dem erfindungsgemäße Block-Copolymer eine Komponente mit mindestens 2 isocyanat-reaktiven Gruppen, bevorzugt eine Polyol-Komponente, ein Katalysator sowie ein Polyisocyanat und/oder ein Polyisocyanat-Präpolymer eingesetzt werden. Dabei wird der Katalysator insbesondere über die Polyol-Komponente eingebracht. Geeignete Polyol-Komponenten, Katalysatoren sowie Polyisocyanate und/oder Polyisocyanat-Präpolymere sind dem Fachmann wohlbekannt, werden allerdings im folgenden noch genauer beschrieben.

Als Polyolkomponente b) geeignete Polyole im Sinne der vorliegenden Erfindung sind alle organischen Substanzen mit einer oder mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1,8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Zur Herstellung von PU-Hartschäumen kommen bevorzugt Polyole oder Mischungen davon zum Einsatz mit der Maßgabe, dass zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen. Der prinzipielle Unterschied zwischen Weichschaum und Hartschaum ist, dass ein Weichschaum ein elastisches Verhalten zeigt und reversibel verformbar ist. Wenn der Weichschaum durch Krafteinwirkung verformt wird, geht er wieder in seine Ausgangsform zurück, sobald die Krafteinwirkung entfällt. Der Hartschaum dagegen wird dauerhaft verformt. Dies ist dem Fachmann wohlbekannt.

Polyetherpolyole können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung

Polyesterpolyole basieren auf Estern mehrwertiger aliphatischer oder aromatischer Carbonsäuren, bevorzugt mit 2 - 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Ethylenglykol, Diethylenglykol, Trimethylolpropan und Glycerin erhalten.

Gemäß einer besonders bevorzugten Ausführungsform der Erfindung sind in der erfindungsgemäßen Zusammensetzung Polyesterpolyol(e) enthalten.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO₂ und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von vorzugsweise 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Sinne dieser Erfindung im Bereich von 10 bis 1000, bevorzugt 40 bis 500. Dies entspricht einer bevorzugten Ausführungsform der Erfindung. Ein Index von 100 steht für ein molares Verhältnis der reaktiven Gruppen von 1 zu 1.

Als Isocyanatkomponenten c) werden vorzugsweise ein oder mehrere organische Polyisocyanate mit zwei oder mehr Isocyanat-Funktionen eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf basis Isocyanurat, Biurete- Urethdione.) Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

### d) Katalysatoren

Geeignete, optional einsetzbare, Katalysatoren d) im Sinne der vorliegenden Erfindung sind alle Verbindungen, die in der Lage sind die Reaktion von Isocyanaten mit OH- Funktionen, NH-Funktionen oder anderen isocyanat-reaktiven Gruppen zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), metallorganische Verbindungen und Metallsalze, vorzugsweise die des Zinn, Eisen, Bismut und Zink. Insbesondere können als Katalysatoren Gemische mehrerer Komponenten eingesetzt werden.

Komponente e), sind optional einsetzbare weitere Schaumstabilisatoren, die keine erfindungsgemäßen Block-Copolymere sind. Es können vorzugsweise oberflächenaktive siliziumhaltige Verbindungen sein, die dazu dienen, die gewünschte Zellstruktur und den Verschäumungsprozess noch weiter zu optimieren. Es können im Rahmen dieser Erfindung alle Si-haltigen Verbindungen eingesetzt werden, die die Schaumherstellung unterstützen (Stabilisierung, Zellregulierung, Zellöffnung, etc.). Diese Verbindungen sind aus dem Stand der Technik hinreichend bekannt. Als oberflächenaktive Si-haltige Verbindungen können alle bekannten Verbindungen eingesetzt werden, die zur Herstellung von PU-Schaum geeignet sind.

Entsprechende, im Sinne dieser Erfindung einsetzbare Siloxanstrukturen werden z.B. in den folgenden Patentschriften beschrieben, wobei dort die Verwendung allerdings nur in klassischen Polyurethanschäumen, als Formschaum, Matratze, Isolationsmaterial, Bauschaum, etc., beschrieben ist: CN 103665385, CN 103657518, CN 103055759, CN 103044687, US 2008/ 0125503, US 2015/0057384, EP 1520870 A1, EP 1211279, EP 0867464, EP 0867465, EP 0275563. Diese Schriften werden hiermit als Referenz eingeführt und gelten als Teil des Offenbarungsgehaltes der vorliegenden Erfindung.

Die Verwendung von Treibmitteln f) ist optional, je nachdem welches Verschäumungsverfahren verwendet wird. Es kann mit chemischen und physikalischen Treibmitteln gearbeitet werden. Die Wahl des Treibmittels hängt hier stark von der Art des Systems ab.

Je nach Menge des verwendeten Treibmittels wird ein Schaum mit hoher oder niedriger Dichte hergestellt. So können Schäume mit Dichten von 5 kg/m³ bis 900 kg/m³ hergestellt werden. Bevorzugte Dichten sind 8 bis 800, besonders bevorzugt 10 bis 600 kg/m3, insbesondere 30 bis 150 kg/m³.

Als physikalische Treibmittel können entsprechende Verbindung mit passenden Siedepunkten eingesetzt werden. Ebenso können chemische Treibmittel eingesetzt werden, die mit NCO-Gruppen und Freisetzung von Gase reagieren, wie beispielsweise Wasser oder Ameisensäure. Beispiele für Treibmittel sind verflüssigtes CO₂, Stickstoff, Luft, leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine (HFO) oder Hydrohaloolefine wie z.B. 1234ze, 1233zd(E) oder 1336mzz, Sauerstoffhaltige Verbindungen wie Methylformiat, Aceton und Dimethoxymethan, oder Chlorkohlenwasserstoffe, bevorzugt Dichlormethan und 1,2-Dichlorethan.

Als optionale Zusatzstoffe g) können alle nach dem Stand der Technik bekannten Substanzen verwendet werden, die bei der Herstellung von Polyurethanen, vorzugsweise PU-Schaum, insbesondere von Polyurethanhartschaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit, Aluminiumoxide, Antimon-Verbindungen und Melamin, geeignet. Der erfindungsgemäße Einsatz der Block-Copolymere ermöglicht den Einsatz sehr hoher Mengen an Flammschutzmittel, insbesondere auch flüssiger Flammschutzmittel, wie z.B. TEP, TCPP, TCEP, DMMP, was normalerweise zu eher instabilen Formulierungen führt.

Ein weiterer Gegenstand der Erfindung ist ein Verfahren zur Herstellung von Polyurethanschaum, insbesondere Polyurethanhartschaum, durch Umsetzung einer oder mehrerer Polyolkomponenten mit einer oder mehrerer Isocyanatkomponenten, wobei die Umsetzung in Gegenwart von erfindungsgemäßem Block-Copolymer auf Basis von OH- oder Amino-funktionalisierten Polyolefinen und Polyestern erfolgt, insbesondere unter Einsatz einer erfindungsgemäßen Zusammensetzung wie zuvor beschrieben. Um Wiederholungen zu vermeiden wird hierzu auf den vorausgegangenen Text verwiesen. Insbesondere mit Blick auf bevorzugte Ausführungsformen der Erfindung wird auf den vorausgegangenen Text verwiesen. Die erfindungsgemäßen Block-Copolymere wirken als Schaumstabilisator.

Die erfindungsgemäß herzustellenden Schäume, insbesondere PU-Hartschäume, weisen Dichten von vorzugsweise 5 kg/m³ bis 900 kg/m³, bevorzugt 8 bis 800, besonders bevorzugt 10 bis 600 kg/m³, insbesondere 20 bis 150 kg/m³ auf.

Insbesondere können geschlossenzellige PU-Schäume, bevorzugt PU-Hartschäume, erhalten werden, wobei die Geschlossenzelligkeit vorteilhafterweise > 80%, vorzugsweise > 90 % beträgt. Dies entspricht einer ganz besonders bevorzugten Ausführungsform der Erfindung. Die Bestimmung der Geschlossenzelligkeit erfolgt im Sinne dieser Erfindung vorzugsweise nach DIN ISO 4590 per Pyknometer.

Das erfindungsgemäße Verfahren zur Herstellung von PU-Schäumen kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- bzw. Polyisocyanurat-Hartschaumformulierung im Sinne dieser Erfindung ergibt ein Raumgewicht von 5 bis 900 kg/m³ und hat die in Tabelle 1 genannte Zusammensetzung.

**Tabelle 1: Zusammensetzung einer bevorzugten Polyurethan- bzw. Polyisocyanurat-Hartschaumformulierung**

| Komponente | Gewichtsanteil |
|---|---|
| Erfindungsgemäße Block-Copolymere | >0,5 bis 5 |
| Polyol | >0 bis 99,9 |
| Amin-Katalysator | 0 bis 5 |
| Metall-Katalysator | 0 bis 10 |
| Polyethersiloxan | 0 bis 5 |
| Wasser | 0,01 bis 20 |
| Treibmittel | 0 bis 40 |
| Weitere Additive (Flammschutzmittel etc.) | 0 bis 300 |
| | |
| Isocyanat-Index: 10 bis 1000 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen, insbesondere auf die dort genannten bevorzugten Ausführungsformen verwiesen.

Ein weiterer Gegenstand der Erfindung ist ein Polyurethanschaum, vorzugsweise PU-Hartschaum, erhältlich durch das genannte Verfahren.

Gemäß einer bevorzugten Ausführungsform handelt es sich um einen Polyurethanhartschaum, dessen Raumgewicht von 5 bis 750 kg/m³, vorzugsweise von 5 bis 350 kg/m³ beträgt.

Gemäß einer weiteren bevorzugten Ausführungsform der Erfindung weist der Polyurethanschaum, vorzugsweise PU-Hartschaum, ein Raumgewicht von 5 bis 900 kg/m³, bevorzugt 8 bis 800, besonders bevorzugt 10 bis 600 kg/m³, insbesondere 20 bis 150 kg/m³ auf und die Geschlossenzelligkeit beträgt vorteilhafterweise > 80%, vorzugsweise > 90 %.

Die erfindungsgemäßen Polyurethanschäume zeichnen sich vorteilhafterweise dadurch aus, dass sie mindestens ein erfindungsgemäßes Block-Copolymer, wie oben beschrieben, aufweisen und vorzugsweise durch das erfindungsgemäße Verfahren erhältlich sind.

Die erfindungsgemäßen PU-Schäume (Polyurethan- oder Polyisocyanuratschaumstoffe), insbesondere PU-Hartschäume, können als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungsschäumen oder Sprühschäumen verwendet werden.

Insbesondere in der Kühlhaus-, Kühlgeräte- und Hausgeräteindustrie; z.B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU-Schäume, insbesondere PU-Hartschäume, mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Erfindungsgemäße Kühlapparaturen weisen als Isoliermaterial einen erfindungsgemäßen PU-Schaum (Polyurethan- oder Polyisocyanuratschaumstoff), insbesondere PU-Hartschaum, auf.

Ein weiterer Gegenstand der Erfindung liegt in der Verwendung des PU-Schaums, insbesondere PU-Hartschaum, als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

Ein weiterer Gegenstand der Erfindung liegt in der Verwendung von erfindungsgemäßem Block-Copolymer, wie zuvor beschrieben, bei der Herstellung von PU-Schäumen, insbesondere PU-Hartschäumen, vorzugsweise als Schaumstabilisator, bevorzugt zur Verbesserung der Isoliereigenschaften des Schaumstoffs, insbesondere unter Einsatz einer erfindungsgemäßen Zusammensetzung wie zuvor beschrieben

Die erfindungsgemäßen Gegenstände sind vorstehend oder nachfolgend beispielhaft beschrieben, ohne dass die Erfindung auf diese beispielhaften Ausführungsformen beschränkt sein soll. Sind vorstehend oder nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden vorstehend oder nachfolgend Mittelwerte angegeben, so handelt es sich, wenn nicht anderes angegeben, um Gewichtsmittel. Werden vorstehend oder nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1:

Synthese der Block-Copolymere auf Basis von OH- oder Amino-funktionalisierten Polyolefinen und Polyestern

### Synthese Block-Copolymer 1

225 g POLYVEST® HT (hydroxyterminiertes Polybutadien der Fa. Evonik Resource Efficiency GmbH) werden mit 525 g ε-Caprolacton und 0,75 g eines Titankatalysators unter Stickstoffstrom in einen 2 Liter Mehrhalskolben mit Rückflusskühler vermengt. Anschließend wird die Mischung unter stetem Stickstoffstrom und Rühren auf 160 °C für 6 Stunden erhitzt. Die GPC-Analyse des Block-Copolymers ergibt ein mittleres Molekulargewicht Mₙ von 6300 g/mol bei einem PDI von 3,7, die DSC-Analyse ergibt einen Schmelzpunkt Tₘ von 54,3 °C und einen Glasübergangspunkt T_{g} von -74,0 °C. Die OH-Zahl des Polymers beträgt 17 mg KOH/g Polymer.

### Synthese Block-Copolymer 2

450 g POLYVEST® HT werden mit 750 g ε-Caprolacton, 300 g Lactid und 1,50 g eines Titankatalysators unter Stickstoffstrom in einen 2 Liter Mehrhalskolben mit Rückflusskühler vermengt. Anschließend wird die Mischung unter stetem Stickstoffstrom und Rühren auf 160 °C für 6 Stunden erhitzt. Die GPC-Analyse des Block-Copolymers ergibt ein mittleres Molekulargewicht Mₙ von 7500 g/mol bei einem PDI von 3,0, die DSC-Analyse ergibt zwei Glasübergangspunkte T_{g1} von -82,2 °C und T_{g2} von -50,4 °C. Die OH-Zahl des Polymers beträgt 17 mg KOH/g Polymer.

### Synthese Block-Copolymer 3

750 g POLYVEST® HT werden mit 375 g ε-Caprolacton, 375 g Lactid und 1,50 g eines Titankatalysators unter Stickstoffstrom in einen 2 Liter Mehrhalskolben mit Rückflusskühler vermengt. Anschließend wird die Mischung unter stetem Stickstoffstrom und Rühren auf 160 °C für 6 Stunden erhitzt. Die GPC-Analyse des Block-Copolymers ergibt ein mittleres Molekulargewicht Mₙ von 6600 g/mol bei einem PDI von 2,4, die DSC-Analyse ergibt zwei Glasübergangspunkte T_{g1} von -79,5 °C und T_{g2} von -38,7 °C. Die OH-Zahl des Polymers beträgt 26 mg KOH/g Polymer.

### Synthese Block-Copolymer 4

750 g POLYVEST® HT werden mit 600 g ε-Caprolacton, 150 g Lactid und 1,50 g eines Titankatalysators unter Stickstoffstrom in einen 2 Liter Mehrhalskolben mit Rückflusskühler vermengt. Anschließend wird die Mischung unter stetem Stickstoffstrom und Rühren auf 160 °C für 6 Stunden erhitzt. Die GPC-Analyse des Block-Copolymers ergibt ein mittleres Molekulargewicht Mₙ von 7000 g/mol bei einem PDI von 2,4, die DSC-Analyse ergibt einen Schmelzpunkt Tₘ von 19,8 °C und einen Glasübergangspunkt T_{g} von -71,0 °C. Die OH-Zahl des Polymers beträgt 27 mg KOH/g Polymer.

### Synthese Block-Copolymer 5

750 g Nisso GI1000 (hydroxyterminiertes Polybutadien von Nippon Soda Co Ltd.) werden mit 600 g ε-Caprolacton, 150 g Lactid und 1,50 g eines Titankatalysators unter Stickstoffstrom in einen 2 Liter Mehrhalskolben mit Rückflusskühler vermengt. Anschließend wird die Mischung unter stetem Stickstoffstrom und Rühren auf 160 °C für 6 Stunden erhitzt. Die GPC-Analyse des Block-Copolymers ergibt ein mittleres Molekulargewicht Mₙ von 4000 g/mol bei einem PDI von 1,8, die DSC-Analyse ergibt einen Schmelzpunkt Tₘ von 24,6 °C und zwei Glasübergangspunkte T_{g1} von -60,4 °C und T_{g2} von -47,9 °C. Die OH-Zahl des Polymers beträgt 34 mg KOH/g Polymer.

### Synthese Block-Copolymer 6

600 g POLYVEST® HT werden mit 720 g ε-Caprolacton, 180 g Lactid und 1,50 g eines Titankatalysators unter Stickstoffstrom in einen 2 Liter Mehrhalskolben mit Rückflusskühler vermengt. Anschließend wird die Mischung unter stetem Stickstoffstrom und Rühren auf 160 °C für 6 Stunden erhitzt. Die GPC-Analyse des Block-Copolymers ergibt ein mittleres Molekulargewicht Mₙ von 7300 g/mol bei einem PDI von 2,6, die DSC-Analyse ergibt einen Schmelzpunkt Tₘ von 22,4 °C und einen Glasübergangspunkt T_{g} von -68,8 °C. Die OH-Zahl des Polymers beträgt 22 mg KOH/g Polymer.

Das zahlenmittlere Molekulargewicht der erfindungsgemäßen Block-Copolymere wird nach DIN 55672-1 mittels Gelpermeationschromatographie in Tetrahydrofuran als Eluent und Polystyrol zur Kalibrierung bestimmt.

Die Bestimmung der thermischen Eigenschaften der im Rahmen der vorliegenden Erfindung eingesetzten Block-Copolymere erfolgt durch Dynamische Differenzkalorimetrie (DSC) in Anlehnung an die DSC-Methode DIN 53765. Es werden die Werte des zweiten Heizintervalls angegeben. Die Heizrate betrug 10 K/min.
Die Konzentration der OH-Gruppen (OH-Zahl) wird nach DIN 53240-2 titrimetrisch in mg KOH/g Polymer bestimmt.

### Beispiel 2: PUR Hartschaum

Für den anwendungstechnischen Vergleich wurde folgende Schaumformulierung verwendet:

| Komponente | Gewichtsanteil |
|---|---|
| Polyetherpolyol* | 100 |
| Katalysator** | 2 |
| Surfactant*** | 2 |
| Wasser | 1 |
| Cyclopentan | 14 |
| | |
| MDI**** | 193 |

| | |
|---|---|
| * Daltolac® R 471 der Firma Huntsman, OH-Zahl 470 mg KOH/g ** POLYCAT® 8 der Firma Evonik Industries AG *** Blockcopolymere wie in Beispiel 1 beschrieben oder TEGOSTAB® B 8491 der Evonik Industries AG **** Polymeres MDI, 200 mPa^{∗}s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 7 s bei 2500 Upm verrührt und sofort in eine offene Form von 27,5 x 14 x 14 cm Größe (B x H x T) überführt.

Nach 10 min wurden die Schaumstoffe entformt. Einen Tag nach der Verschäumung wurden die Schaumstoffe analysiert. Die Porenstruktur wurden subjektiv anhand einer Skala von 1 bis 10 beurteilt, wobei 10 einen (idealisierten) ungestörten, sehr feinen Schaum und 1 einen extrem stark gestörten, groben Schaum repräsentiert.

Die Ergebnisse sind in der folgenden Tabelle zusammengestellt:

| **Surfactant** | **Rating** |
|---|---|
| TEGOSTAB B 8491 | 7,0 |
| Block-Copolymer 1 | 6,0 |
| Block-Copolymer 2 | 6,0 |
| Block-Copolymer 3 | 7,0 |
| Block-Copolymer 4 | 7,0 |
| Block-Copolymer 5 | 7,5 |

Die Ergebnisse zeigen, dass insbesondere mit den Block-Copolymeren 3 bis 5 Porenstrukturen und Schaumqualitäten erzielt werden können, die auf dem gleichen Niveau oder leicht über siloxan-basierten Zellstabilisatoren liegen.

Alle anderen für den Gebrauch relevanten Schaumeigenschaften werden durch die erfindungsgemäßen Block-Copolymere nicht oder nur unwesentlich beeinflusst.

### Beispiel 3: PIR Hartschaum

Für den anwendungstechnischen Vergleich wurde folgende Schaumformulierung verwendet:

| Komponente | Gewichtsanteil |
|---|---|
| Polyesterpolyol* | 100 |
| Amin-Katalysator** | 0,6 |
| Kalium-Trimerisierungskatalysator*** | 4 |
| Surfactant**** | 2 |
| Wasser | 1 |
| Cyclopentan | 16 |
| MDI***** | 199 |

| | |
|---|---|
| * Stepanpol® PS 2352 der Firma Stepan, OH-Zahl 250 mg KOH/g ** POLYCAT® 5 der Firma Evonik Industries AG *** KOSMOS® 75 der Firma Evonik Industries AG **** Blockcopolymere wie in Beispiel 1 beschrieben oder TEGOSTAB® B 8491 der Evonik Industries AG ***** Polymeres MDI, 200 mPa^{∗}s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator, Flammschutzmittel und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine offene Form von 27,5 x 14 x 14 cm Größe (B x H x T) überführt.

Nach 10 min wurden die Schaumstoffe entformt. Einen Tag nach der Verschäumung wurden die Schaumstoffe analysiert. Die Porenstruktur wurden subjektiv anhand einer Skala von 1 bis 10 beurteilt, wobei 10 einen (idealisierten) ungestörten, sehr feinen Schaum und 1 einen extrem stark gestörten, groben Schaum repräsentiert.

Die Ergebnisse sind in der folgenden Tabelle zusammengestellt:

| **Surfactant** | **Rating** |
|---|---|
| TEGOSTAB B 8491 | 7,5 |
| Block-Copolymer 1 | 7,5 |
| Block-Copolymer 2 | 8,0 |
| Block-Copolymer 3 | 6,5 |
| Block-Copolymer 4 | 7,0 |
| Block-Copolymer 5 | 6,0 |

Die Ergebnisse zeigen, dass insbesondere mit den Block-Copolymeren 1 und 2 Porenstrukturen und Schaumqualitäten erzielt werden können, die auf dem gleichen Niveau oder leicht über siloxan-basierten Zellstabilisatoren liegen.
Alle anderen für den Gebrauch relevanten Schaumeigenschaften werden durch die erfindungsgemäßen Block-Copolymere nicht oder nur unwesentlich beeinflusst.

### Beispiel 4: PIR Hartschaum

Für den anwendungstechnischen Vergleich wurde folgende Schaumformulierung verwendet:

| Komponente | Gewichtsanteil |
|---|---|
| Polyesterpolyol* | 100 |
| Amin-Katalysator** | 0,6 |
| Kalium-Trimerisierungskatalysator*** | 4 |
| Surfactant**** | 4 |
| Wasser | 0,8 |
| Cyclo/lso-pentan 70:30 | 16 |
| TCPP | 15 |
| MDI***** | 230 |

| | |
|---|---|
| * Stepanpol® PS 2352 der Firma Stepan, OH-Zahl 250 mg KOH/g ** POLYCAT® 5 der Firma Evonik Industries AG *** KOSMOS® 75 der Firma Evonik Industries AG **** Blockcopolymere wie in Beispiel 1 beschrieben oder TEGOSTAB® B 8871 der Evonik Industries AG ***** Polymeres MDI, 200 mPa*s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator, Flammschutzmittel und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 60 °C thermostatisierte Aluminiumform von 25 cm x 50 cm x 7 cm Größe überführt, welche mit Polyethylenfolie ausgekleidet war.

Nach 10 min wurden die Schaumstoffe entformt. Einen Tag nach der Verschäumung wurden die Schaumstoffe analysiert. Oberfläche und Innenstörungen wurden subjektiv anhand einer Skala von 1 bis 10 beurteilt, wobei 10 einem (idealisierten) ungestörten Schaum und 1 einen extrem stark gestörten Schaum repräsentiert. Die Wärmeleitzahl (λ-Wert in mW/m·K) wurde an 2,5 cm dicken Scheiben mit einem Gerät vom Typ Hesto Lambda Control, Modell HLC X206 gemessen bei einer mittleren Temperatur von 10°C entsprechend den Vorgaben der Norm EN12667:2001.

Die Ergebnisse sind in der folgenden Tabelle zusammengestellt:

| **Surfactant** | **Dichte in kg/m³** | **Wärmeleitfähigkeit in mW/mK** | **Oberflache Vorderseite** | **Oberfläche Rückseite** | **Innenstörungen** | **Porenstruktur** |
|---|---|---|---|---|---|---|
| TEGOSTAB B 8871 | 47,5 | 22,1 | 6,0 | 7,0 | 7,0 | 8,0 |
| Block-Copolymer 2 | 48,6 | 22,0 | 7,0 | 6,0 | 6,0 | 8,0 |
| Block-Copolymer 4 | 45,8 | 22,1 | 7,0 | 7,0 | 7,0 | 7,0 |

Die Ergebnisse zeigen, dass mit den Block-Copolymeren Schaumqualitäten und Wärmeleitfähigkeiten erzielt werden können, die auf dem gleichen Niveau oder leicht über siloxan-basierten Zellstabilisatoren liegen.
Alle anderen für den Gebrauch relevanten Schaumeigenschaften werden durch die erfindungsgemäßen Block-Copolymere nicht oder nur unwesentlich beeinflusst.

### Beispiel 5: PIR Hartschaum

Für den anwendungstechnischen Vergleich wurde folgende Schaumformulierung verwendet:

| Komponente | Gewichtsanteil |
|---|---|
| Polyesterpolyol* | 100 |
| Amin-Katalysator** | 0,4 |
| Kalium-Trimerisierungskatalysator*** | 5 |
| Surfactant**** | 2 |
| Wasser | 0,4 |
| Cyclo/Iso-pentan 70:30 | 21 |
| TCPP | 10 |
| MDI***** | 202 |

| | |
|---|---|
| * Stepanpol® PS 2412 der Firma Stepan, OH-Zahl 240 mg KOH/g ** POLYCAT® 5 der Firma Evonik Industries AG *** KOSMOS® 70 LO der Firma Evonik Industries AG **** Blockcopolymere wie in Beispiel 1 beschrieben oder TEGOSTAB®B 8871 der Evonik Industries AG ***** Polymeres MDI, 200 mPa*s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator, Flammschutzmittel und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 60 °C thermostatisierte Aluminiumform von 25 cm x 50 cm x 7 cm Größe überführt, welche mit Polyethylenfolie ausgekleidet war.

Nach 10 min wurden die Schaumstoffe entformt. Einen Tag nach der Verschäumung wurden die Schaumstoffe analysiert. Oberfläche und Innenstörungen wurden subjektiv anhand einer Skala von 1 bis 10 beurteilt, wobei 10 einem (idealisierten) ungestörten Schaum und 1 einen extrem stark gestörten Schaum repräsentiert. Die Wärmeleitzahl (λ-Wert in mW/m·K) wurde an 2,5 cm dicken Scheiben mit einem Gerät vom Typ Hesto Lambda Control, Modell HLC X206 gemessen bei einer mittleren Temperatur von 10°C entsprechend den Vorgaben der Norm EN12667:2001.

Die Ergebnisse sind in der folgenden Tabelle zusammengestellt:

| **Surfactant** | **Dichte in kg/m³** | **Wärmeleitfähigkeit in mW/mK** | **Oberflache Vorderseite** | **Oberfläche Rückseite** | **Innenstörungen** | **Porenstruktur** |
|---|---|---|---|---|---|---|
| TEGOSTAB B 8871 | 37,5 | 23,3 | 4,5 | 5,0 | 7,0 | 7,0 |
| Block-Copolymer 2 | 36,9 | 23,5 | 5,0 | 5,0 | 6,5 | 6,5 |
| Block-Copolymer 6 | 35,8 | 23,5 | 5,0 | 6,0 | 6,5 | 7,0 |

Die Ergebnisse zeigen, dass mit den Block-Copolymeren Schaumqualitäten und Wärmeleitfähigkeiten erzielt werden können, die auf dem gleichen Niveau wie siloxan-basierte Zellstabilisatoren liegen. Alle anderen für den Gebrauch relevanten Schaumeigenschaften werden durch die erfindungsgemäßen Block-Copolymere nicht oder nur unwesentlich beeinflusst.

## Patentansprüche

1. Zusammensetzung zur Herstellung von Polyurethanschaum, vorzugsweise Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, optional Treibmittel, **dadurch gekennzeichnet, dass** die Zusammensetzung Block-Copolymere auf Basis von OH- oder Amino-funktionalisierten Polyolefinen und Polyestern umfasst.

2. Zusammensetzung gemäß Anspruch 1, **dadurch gekennzeichnet, dass** es sich bei den Block-Copolymeren um B(A)x -Blocksysteme, mit A = Polyester, mit B = OH- oder Amino-funktionalisiertes Polyolefin und mit x ≥ 1 handelt, vorzugsweise x = 1,5 bis 5, insbesondere x = 2 bis 3.

3. Zusammensetzung nach Anspruch 2, **dadurch gekennzeichnet, dass** das OH- oder Amino-funktionalisierte Polyolefin B ein Polybutadien enthaltend die oder vorzugsweise bestehend aus den von 1,3-Butadien abgeleiteten Monomereinheiten 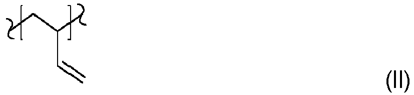 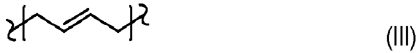 und 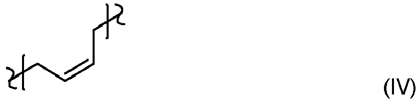 ist, mit der Maßgabe, dass die Monomereinheiten (II), (III) und (IV) blockweise oder statistisch verteilt angeordnet sein können, wobei eine eckige Klammer bei der gewählten formelmäßigen Darstellung der im Polybutadien enthaltenen aus 1,3-Butadien abgeleiteten Monomereinheiten (II), (III) und (IV) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit, einer Hydroxygruppe oder eine Aminogruppe verbunden ist.

4. Zusammensetzung nach Anspruch 3, **dadurch gekennzeichnet, dass** im Polyolefinrest B zusätzlich zu einem Anteil von bis zu 5 Molprozent bezogen auf das Polybutadien eine oder mehrere verzweigende Struktur/en der Formeln (V), (VI) oder (VII) 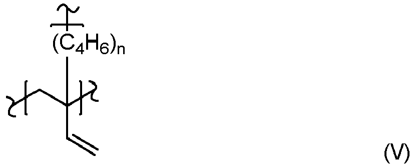 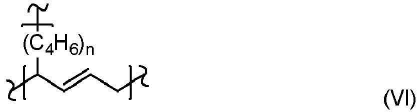 und/oder 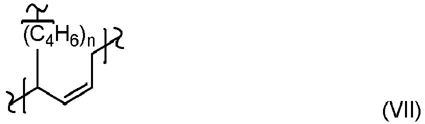 vorhanden sind, wobei "(C₄H₆)ₙ" einem Butadien-Oligomer enthaltend die oder vorzugsweise bestehend aus den Wiederholungseinheiten (II), (III) und (IV) entspricht.

5. Zusammensetzung nach einem der Ansprüche 3 bis 4, **dadurch gekennzeichnet, dass** das Polybutadien in nicht hydrierter, teilweise hydrierter oder vollständig hydrierter Form vorliegt.

6. Zusammensetzung gemäß einem der Ansprüche 2 bis 5, **dadurch gekennzeichnet, dass** der Polyesterrest A die Struktur I aufweist: 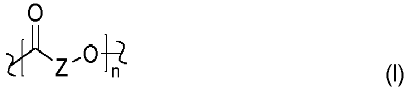 mit Z = gleiche oder verschiedene Kohlenwasserstoffreste, bevorzugt -C₅H₁₀- und/oder -C(CH₃)H-Rest, und n = 1-150.

7. Zusammensetzung gemäß einem der Ansprüche 1 bis 6, **dadurch gekennzeichnet, dass** die Block-Copolymere auf Polyestern aus Lactonen und/oder Lactiden, besonders bevorzugt Caprolacton und/oder Lactid basieren.

8. Zusammensetzung gemäß einem der Ansprüche 1 bis 7, **dadurch gekennzeichnet, dass** der Massenanteil der Gesamtmenge an erfindungsgemäßem Block-Copolymer bezogen auf 100 Massenteile Polyolkomponente 0,1 bis 10 pphp, bevorzugt 0,5 bis 5 pphp und besonders bevorzugt 1 bis 4 pphp beträgt.

9. Zusammensetzung gemäß einem der Ansprüche 1 bis 8, **dadurch gekennzeichnet, dass** Si-haltige Schaumstabilisatoren, bezogen auf die Gesamtmenge an Schaumstabilisatoren, umfassend auch die erfindungsgemäßen Block-Copolymere auf Basis von OH- oder Amino-funktionalisierten Polyolefinen und Polyestern, zu weniger als 15 Gew.-%, vorzugsweise weniger als 10 Gew.-%, insbesondere weniger als 5 Gew.-% oder gar nicht enthalten sind.

10. Zusammensetzung gemäß einem der Ansprüche 1 bis 8, **dadurch gekennzeichnet, dass** Si-haltige Schaumstabilisatoren, bezogen auf die Gesamtmenge an Schaumstabilisatoren, umfassend auch die erfindungsgemäßen Block-Copolymere auf Basis von OH- oder Amino-funktionalisierten Polyolefinen und Polyestern, zu mehr als 10 Gew.-%, insbesondere mehr als 20 Gew.% und besonders bevorzugt zu mehr als 50 Gew.-% enthalten sind.

11. Zusammensetzung gemäß einem der Ansprüche 2 bis 10, **dadurch gekennzeichnet, dass** der massengewichtete Anteil des Polyesterrestes A mindestens 20%, bevorzugt mindestens 30% besonders bevorzugt mindestens 35% beträgt.

12. Verfahren zur Herstellung von Polyurethanschaum, vorzugsweise Polyurethanhartschaum, durch Umsetzung einer oder mehrerer Polyolkomponenten mit einer oder mehrerer Isocyanatkomponenten, **dadurch gekennzeichnet, dass** die Umsetzung in Gegenwart von Block-Copolymer auf Basis von OH- oder Amino-funktionalisierten Polyolefinen und Polyestern erfolgt, insbesondere unter Einsatz einer Zusammensetzung gemäß einem der Ansprüche 1 bis 11.

13. Verwendung von Block-Copolymeren auf Basis von OH- oder Amino-funktionalisierten Polyolefinen und Polyestern bei der Herstellung von Polyurethanschaumstoffen, vorzugsweise Polyurethanhartschaumstoffen, vorzugsweise als Schaumstabilisator, bevorzugt zur Verbesserung der Isoliereigenschaften des Schaumstoffs, insbesondere unter Einsatz einer Zusammensetzung gemäß einem der Ansprüche 1 bis 11.

14. Polyurethanschaumstoff, vorzugsweise Polyurethanhartschaumstoff, erhältlich durch ein Verfahren gemäß Anspruch 12.

15. Verwendung des Polyurethanschaumstoffs, vorzugsweise Polyurethanhartschaumstoffs, gemäß Anspruch 14 als Dämmplatten und/oder Isolationsmittel, vorzugsweise für Kühlapparaturen.
